# EUROPEAN PATENT APPLICATION

(11) **EP 4 625 685 A1**
(43) Date of publication of application: **01.10.2025**
(21) Application number: 24839988.3
(22) Date of filing: 04.07.2024
(51) Int. Cl.: H01M 50/593, H01M 50/588, H01M 50/502

(54) **CELL STACK ASSEMBLY**

(30) Priority: 07.07.2023 KR 20230088554
(71) Applicant: LG Energy Solution, Ltd., Seoul 07335 (KR)
(72) Inventor: SEON, Sang Ok, Daejeon 34122 (KR); SHIN, Jae Wook, Daejeon 34122 (KR); KIM, Jee Won, Daejeon 34122 (KR); LEE, Yong Seon, Daejeon 34122 (KR)
(74) Representative: Plasseraud IP
(86) International application number: PCT/KR2024/009435
(87) International publication number: WO 2025/014175

(57) **Abstract**

Disclosed herein relates to a cell stack assembly with an insulating cover having a structure capable of separating each busbar.

The cell stack assembly of the present invention includes: a cell stack including a plurality of cells from which electrode leads are drawn out; a busbar frame assembly including a plurality of busbars electrically connected to electrode leads of the cell stack, a busbar frame supporting the busbar, and ribs spanning between the busbars, and coupled to the cell stack; and an insulating cover coupled to the busbar frame to cover the busbar frame assembly, wherein the insulating cover includes a separation wall member formed at a location corresponding to a rib of the busbar frame assembly.

## Description

### [Technical Field]

The present invention relates to a cell stack assembly with an insulating cover that can block or limit the space between a pair of busbars disposed next to each other.

This application claims the benefit of priority from Korean Patent Application No. 10-2023-0088554, filed on July 7, 2023, the disclosure of which is incorporated herein by reference in its entirety.

### [Background Technology of the Invention]

When a plurality of cells is connected in series/parallel to form a battery pack, it is common to configure a cell stack assembly comprising at least one cell, and to use the at least one cell stack assembly to add other components to form a battery pack.

Such a cell stack assembly includes a cell stack having a plurality of cells stacked thereon, and a busbar frame covering a front and rear surface of the cell stack.

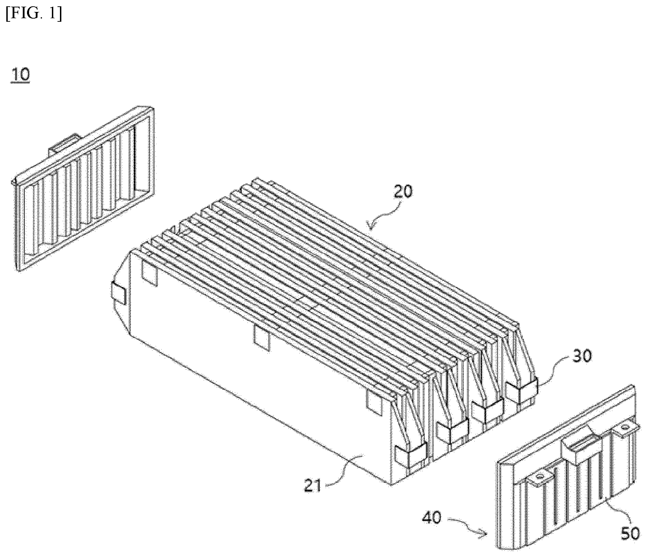

FIG. 1 is a diagram illustrating a conventional cell stack assembly 10.

According to FIG. 1, the cell stack 20 includes a plurality of cells 21 stacked in one direction. Each of the cells 21 has electrode leads 30 drawn out from both sides thereof.

Thus, the conventional cell stack assembly 10 has a plurality of electrode leads 30 drawn out from the front and rear surfaces of the cell stack 20.

The busbar frame 40 is provided with a plurality of busbars 50 that are electrically connected to the electrode leads 30 of the cell stack 20 as shown in FIG. 1.

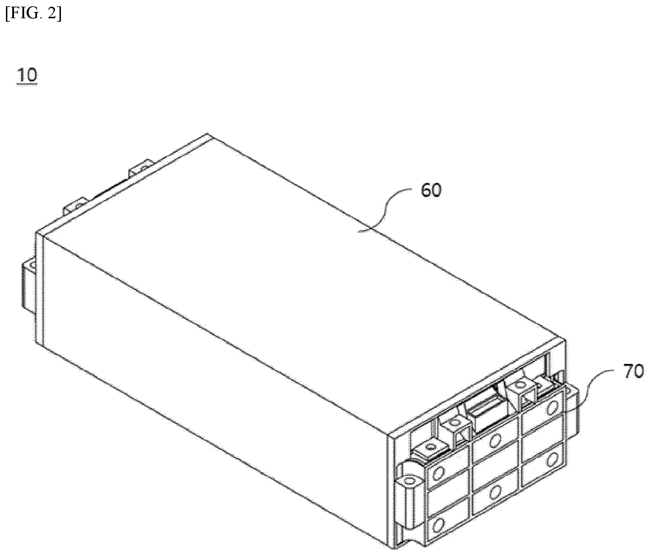

Conventional cell stack assembly 10 may have an end plate 70 covering the busbar frame 40 as shown in FIG. 2, and may also have a module frame 60 that wraps around the perimeter of the cell stack 20.

Meanwhile, the plurality of separated busbars 50 may be provided on the busbar frame 40 such that they are spaced apart by a predetermined distance to prevent direct contact, while precipitation of metal may occur on the surface of the water channel due to the continuous oxidation/reduction reactions, resulting in the formation of a metal protrusion D. The metal protrusion D may continue to grow and cause problems in connecting two busbars 50 spaced apart from each other.

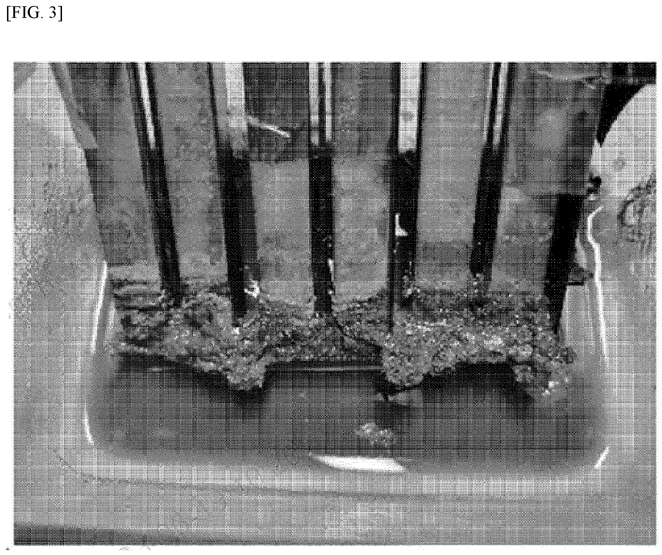

FIG. 3 illustrates a busbar 50 having metal precipitation on its surface caused by an oxidation/reduction reaction while immersed in an electrolyte, wherein, referring to FIG. 3, it can be seen that each separate busbar 50 is connected to the other by metal protrusions D created by the precipitation.

### [Prior art reference]

Korean Public Patent No. 10-2022-0011430

### [Description of the Invention]

### [Technical Problem]

Accordingly, the present invention is designed to address the above problems, and aims to provide a cell stack assembly having a structure capable of inhibiting the occurrence of busbar-to-busbar shorts.

Other objects and advantages of the present invention will be understood from the following description, and will become more apparent from the embodiments of the present invention. It will also be readily apparent that the objects and advantages of the present invention may be realized by the means and combinations thereof disclosed in the patent claims.

### [Technical Solution]

According to the present invention, the present invention provides a cell stack assembly including: a cell stack comprising a plurality of cells from which electrode leads are drawn out.

A busbar frame assembly including a plurality of busbars electrically connected to electrode leads of the cell stack, a busbar frame supporting the busbar, and ribs spanning between the busbars, and coupled to the cell stack; and an insulating cover coupled to the busbar frame to cover the busbar frame assembly, wherein the insulating cover includes a separation wall member formed at a location corresponding to a rib of the busbar frame assembly.

The rib may be arranged to be spaced apart along a longitudinal direction of the busbar frame, and extend along a width direction of the busbar frame.

The separation wall member may be formed to extend along a longitudinal direction of the rib to limit the space between any pair of neighboring busbars.

The separation wall member may be formed in one-to-one correspondence with each rib.

The separation wall member may protrude by a spacing distance from an end of the rib to an inner side of the insulating cover.

The separation wall members may be spaced apart from the rib at a predetermined distance along a longitudinal direction of the busbar frame so as not to abut the ribs.

The separation wall member is formed at a same position as the rib, and the separation wall member and the rib may be butted and coupled together to isolate the space between each busbar.

The separation wall member may protrude beyond a spacing distance from an end of the rib to an inner side of the insulating cover.

The separation wall members may be spaced apart from the ribs at a predetermined distance along a longitudinal direction of the busbar frame so as not to abut the ribs.

Each of the ribs may be formed with a pair of corresponding separation wall members.

The pair of separation wall members may be spaced apart by a predetermined distance greater than the thickness of the ribs.

The pair of separation wall members may protrude by a spacing distance from an end of the ribs to an inner side of the insulating cover.

The pair of separation wall members may be spaced apart from the ribs at a predetermined distance along a longitudinal direction of the busbar frame so as not to abut the ribs.

The pair of separation wall members may protrude beyond a spacing distance from an end of the ribs to an inner side of the insulating cover.

The pair of separation wall members may be spaced apart from the ribs at a predetermined distance along a longitudinal direction of the busbar frame so as not to abut the ribs.

### [Advantageous Effects]

According to the present invention, in a cell stack assembly, safety can be improved by suppressing the occurrence of shorts at the busbar area.

### [Brief Description of the Drawings]

FIG. 1 illustrates a conventional cell stack assembly.
FIG. 2 illustrates a conventional cell stack assembly with module frames and end plates.
FIG. 3 illustrates a busbar with metal protrusions formed.
FIG. 4 is an exploded perspective view of a cell stack assembly of the present invention.
FIG. 5 illustrates a busbar frame assembly and a corresponding insulating cover.
FIG. 6 illustrates a busbar frame assembly included in a cell stack assembly according to a first embodiment, and an insulating cover coupled thereto.
FIG. 7 is a sectional view of the busbar frame assembly and insulating cover of FIG. 6, showing only a portion of the area where the ribs and separation wall members are located.
FIG. 8 illustrates an example of a metal protrusion generated from a busbar on the busbar frame of FIG. 7.
FIG. 9 illustrates another example of a metal protrusion generated from a busbar on the busbar frame of FIG. 7.
FIG. 10 illustrates a busbar frame assembly included in a cell stack assembly according to a second embodiment, and an insulating cover coupled thereto.
FIG. 11 is a sectional view of the busbar frame assembly and insulating cover of FIG. 10, showing only a portion of the area where the ribs and separation wall members are located.
FIG. 12 illustrates a busbar frame assembly included in a cell stack assembly according to a third embodiment, and an insulating cover coupled thereto.
FIG. 13 is a sectioned view of the busbar frame assembly and insulating cover of FIG. 12, showing only a portion of the area where the ribs and separation wall members are located.
FIG. 14 illustrates a busbar frame assembly included in a cell stack assembly according to a fourth embodiment, and an insulating cover coupled thereto.
FIG. 15 is a sectional view of the busbar frame assembly and insulating cover of FIG. 14, showing only a portion of the area where the ribs and separation wall members are located.
FIG. 16 illustrates a busbar frame assembly included in a cell stack assembly according to a fifth embodiment, and an insulating cover coupled thereto.
FIG. 17 is a sectional view of the busbar frame assembly and insulating cover of FIG. 16, showing only a portion of the area where the ribs and separation wall members are located.

### [Best Mode for Carrying out the Invention]

Hereinafter, preferred embodiments of the present invention will be described in detail with reference to the accompanying drawings. Prior to this, it should be noted that the terms or words used in this specification and the claims are not to be construed in their ordinary or dictionary sense, but rather in a sense and concept consistent with the technical idea of the invention, based on the principle that the inventor may properly define the concept of a term to best describe his/her invention.

Accordingly, it is to be understood that the embodiments described herein and the configurations illustrated in the drawings are only the most preferred embodiments of the invention and are not intended to be exhaustive of the technical ideas of the invention, and that there may be various equivalents and modifications that may be substituted for them at the time of filing.

Furthermore, in describing the invention, specific descriptions of related known configurations or features are omitted where it is determined that such detailed descriptions would obscure the essence of the invention.

Because the embodiments of the present invention are provided to more fully explain the invention to those of ordinary skill in the art, the shapes and sizes of components in the drawings may be exaggerated, omitted, or shown schematically for clarity. Accordingly, the size or proportion of each component is not necessarily indicative of its actual size or proportion.

The present invention relates to a cell stack assembly with an insulating cover that can block or limit the space between a pair of busbars disposed next to each other.

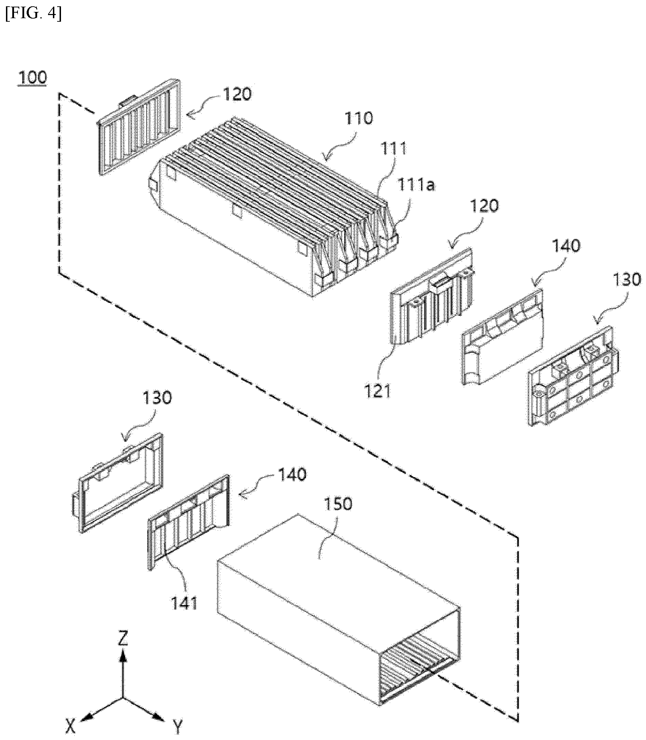

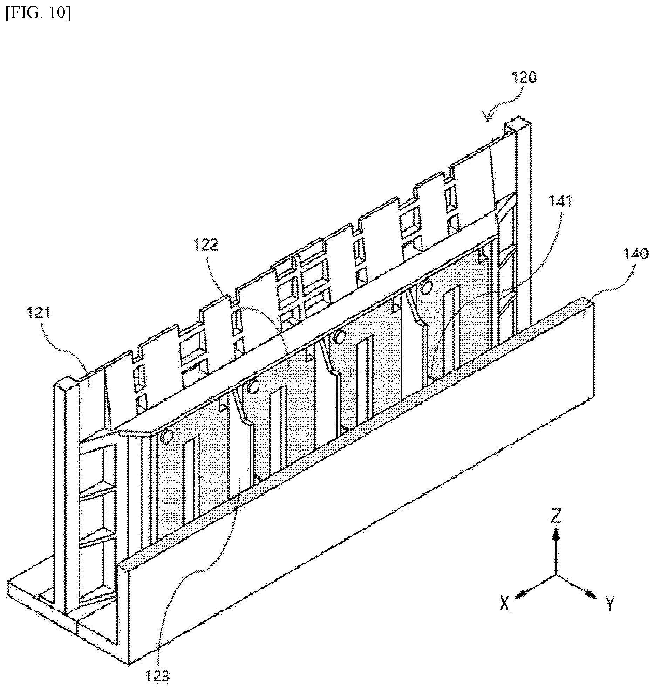

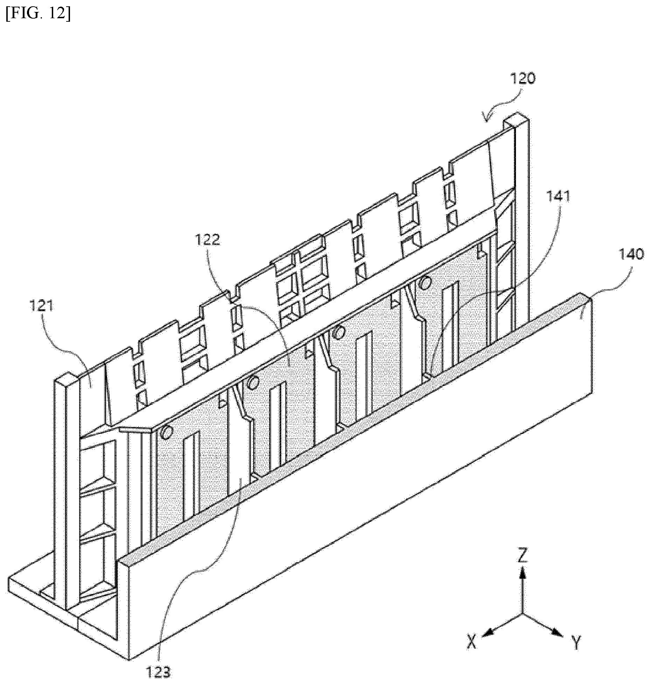

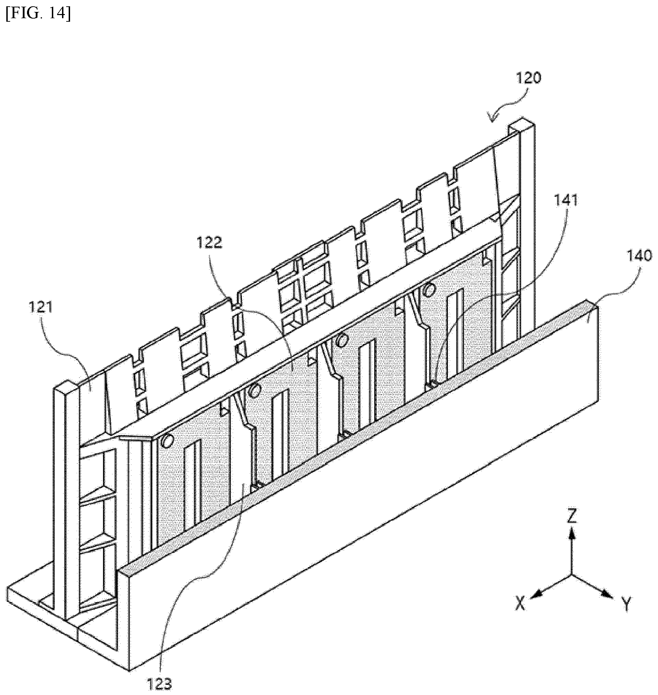

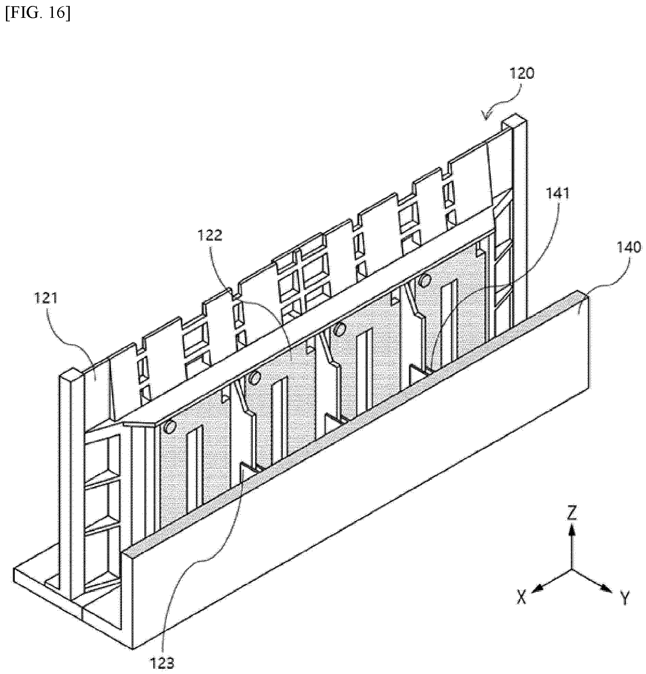

FIGS. 4 through 9 relate to a cell stack assembly according to a first embodiment of the present invention, FIGS. 10 through 11 relate to a cell stack assembly according to a second embodiment of the present invention, FIGS. 12 through 13 relate to a cell stack assembly according to a third embodiment of the present invention, FIGS. 14 through 15 relate to a cell stack assembly according to a fourth embodiment of the present invention, and FIGS. 16 through 17 relate to a cell stack assembly according to a fifth embodiment of the present invention.

Hereinafter, the cell stack assembly of the present invention is described with reference to the accompanying drawings. As used in the following description, relative positioning designations such as front and rear, upper and lower, left and right are intended to aid in understanding the invention and refer to the orientation shown in the drawings unless otherwise defined.

FIG. 4 is an exploded perspective view of the cell stack assembly 100 of the present invention.

A cell stack assembly 100 of the present invention includes a cell stack 110 including a plurality of cells 111, a busbar frame assembly 120 coupled to the cell stack 110, and an end plate 130 coupled to the busbar frame 121.

In addition, the cell stack assembly 100 of the present disclosure may further include a module frame 150 that is coupled to wrap around the perimeter of the cell stack 110, as shown in FIG. 4.

The cell stack 110 includes a plurality of cells 111 stacked unidirectionally, with electrode leads 111a drawn out from both sides.

Specifically, the cells 111 are stacked along the X-direction, and the electrode leads 111a of each cell 111 are drawn out to both sides of the cell 111 along the Y-direction.

The busbar frame assembly 120 includes a plurality of busbars 122 electrically connected to the electrode leads 111a of the cell stack 110, a busbar frame 121 supporting the busbars 122, and ribs 123 spanning between the busbars 122.

The busbar frame assembly 120 is coupled to the front and rear surfaces of the cell stack 110, respectively, from which the electrode leads 111a are drawn out, as shown in FIG. 4.

The busbar 122 is coupled to the front surface of the busbar frame 121, and the cell stack 110 is coupled to the rear surface of the busbar frame 121.

The busbar frame 121 includes an opening hole through which the electrode leads 111a can penetrate. Accordingly, the cell stack 110 is coupled to a rear surface of the busbar frame 121 by allowing the electrode leads 111a to penetrate through the opening hole.

A plurality of busbars 122 are coupled to the busbar frame 121, each busbar 122 being spaced apart at a predetermined distance.

The busbar 122 may be in the form of a doughnut with an open center as shown in the present invention, but may be in any shape that can be electrically connected to the electrode leads 111a penetrating the open hole.

The plurality of busbars 122 are spaced apart along the longitudinal direction of the busbar frame 121. That is, each busbar 122 is spaced apart at the front surface of the busbar frame 121 along the X-direction.

The ribs 123 are formed to protrude from the front surface of the busbar frame 121 between any pair of neighboring busbars 122 such that each busbar 122 can be separated.

The ribs 123 are formed extending along the Z-direction such that the ends of any pair of busbars 122 disposed adjacent to each other do not face each other. That is, the ribs 123 are formed extending from the lower to the upper end of the busbar frame 121.

The ribs 123 are formed to protrude between all busbars 122 disposed on the busbar frame 121.

The end plate 130 is coupled to cover the front surface of the busbar frame 121 to protect a busbar 122 formed on the front surface of the busbar frame 121 and electrode leads 111a electrically connected to the busbar 122.

The module frame 150 is coupled to wrap around the perimeter of the cell stack 110 that is exposed to the outside without not being covered by an end plate 130 or the like. That is, the module frame 150 wraps around and protects both surfaces exposed in the X-direction and the upper and lower surfaces exposed in the Z-direction of the cell stack 110.

The module frame 150 may be, but is not limited to, the tubular shape shown in FIG. 4, and may be any shape that can effectively wrap around and protect the perimeter of the cell stack 110.

The cell stack assembly 100 of the present invention further includes an insulating cover 140 interposed between the busbar frame assembly 120 and end plates 130 to prevent direct contact between the busbar frame assembly 120 and end plates 130, thereby preventing the passage of electricity.

The insulating cover 140 is made of a material having electrically insulating properties and is coupled to the busbar frame assembly 120 to wrap around both the exposed busbar 122 and electrode leads 111a.

In particular, the present invention is characterized in that a separation wall member 141 is formed on the inner surface of the insulating cover 140 in a position corresponding to the ribs 123 of the busbar frame assembly 120.

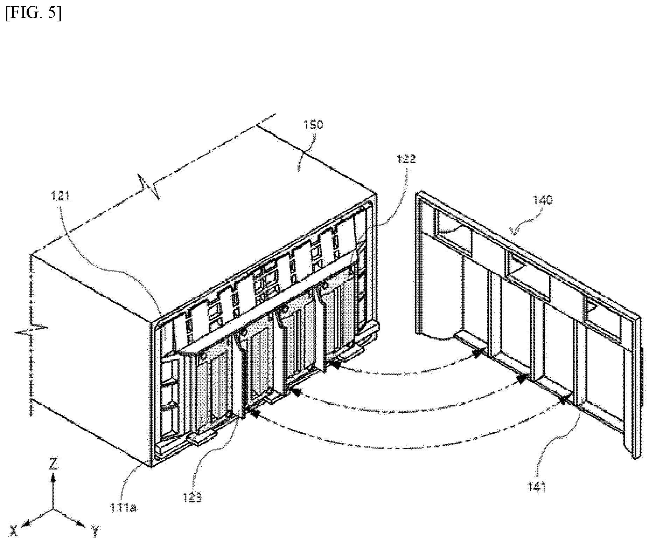

FIG. 5 illustrates a busbar frame assembly 120 and a corresponding insulating cover 140. More specifically, FIG. 5 illustrates a busbar frame assembly 120 coupled to a cell stack 110 and an insulating cover 140 including a separation wall members 141 corresponding to ribs 123 of the busbar frame assembly 120.

Referring to FIG. 5, the cell stack 110 is enclosed and protected by the module frame 150, with only the electrode leads 111a penetrating the busbar frame 121 and coupled to the busbar 122.

The separation wall member 141 is formed extending along the longitudinal direction of the rib 123 to limit the space between any pair of neighboring busbars 122 as shown in FIG. 5.

Thus, the space between the busbar frame assembly 120 and the insulating cover 140 formed by the ribs 123 of the busbar frame assembly 120 and the separation wall members 141 of the insulating cover 140 formed corresponding to the ribs 123 may be compartmentalized in accordance with the number of busbars 122. For example, the cell stack assembly 100 of FIG. 5 includes four busbars 122, and the space between the busbar frame assembly 120 and the insulating cover 140 is compartmentalized into four spaces by the ribs 123 and the separation wall members 141.

Hereinafter, the cell stack assembly 100 of the present invention with variations in the structure of the separation wall member 141 and the rib 123 will be described for each embodiment.

### (First embodiment)

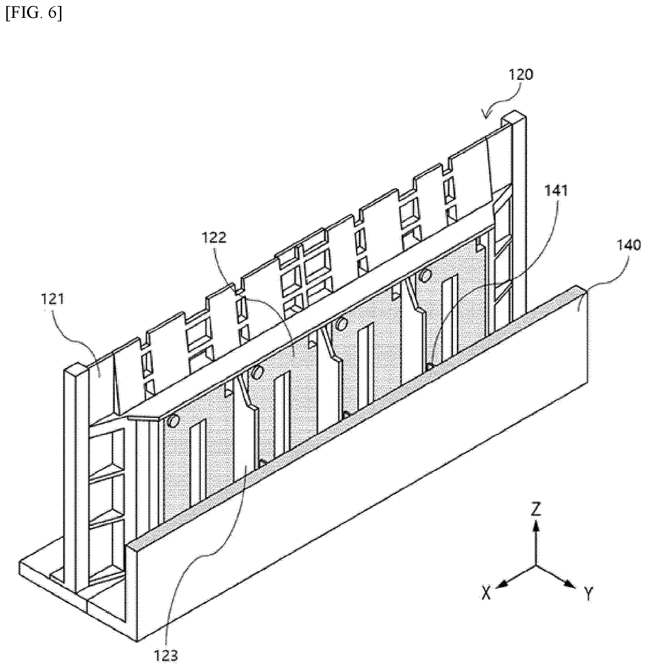

FIG. 6 illustrates a busbar frame assembly 120 included in a cell stack assembly 100 according to a first embodiment and an insulating cover 140 coupled thereto, wherein the insulating cover 140 has been partially incised for ease of understanding.

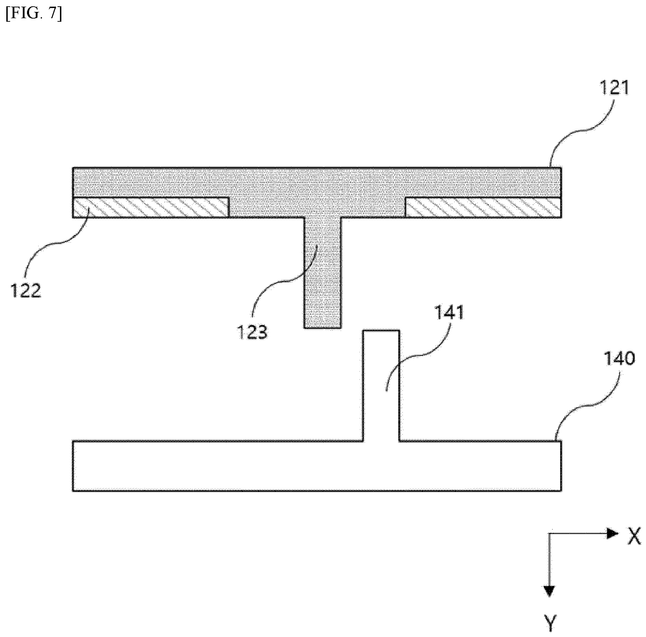

FIG. 7 is a sectional view of the busbar frame assembly 120 and insulating cover 140 of FIG. 6, showing only a portion of the area where ribs 123 and separation wall members 141 are located.

Referring to FIGS. 6 and 7, the separation wall member 141 is formed to protrude by a spacing distance from the end of the rib 123 to the inner side of the insulating cover 140. However, the separation wall member 141 is spaced apart from the rib 123 by a predetermined distance along the longitudinal direction of the busbar frame 121, i.e., in the X direction, so as not to contact the rib 123.

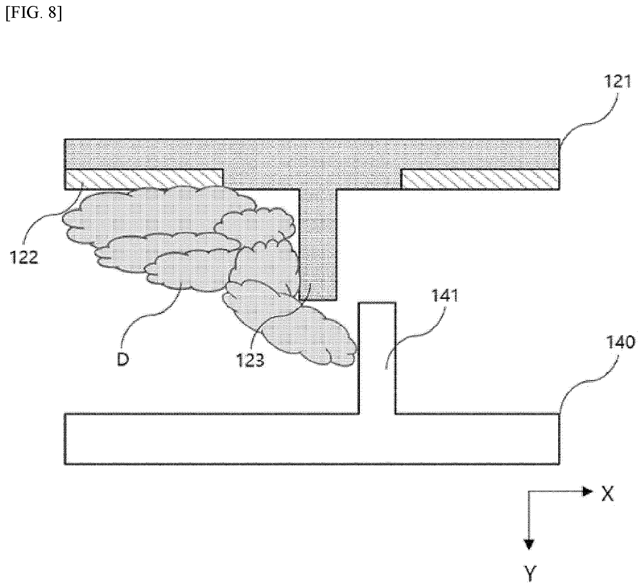

FIG. 8 illustrates a metal protrusion D grown on one of the busbars 122 provided on the busbar frame 121 of FIG. 7.

Referring to FIG. 8, a metal protrusion D is formed on the busbar 122 located on the left side relative to the rib 123, along the side of the rib 123, but is blocked by the separation wall member 141 from growing to the other busbar 122.

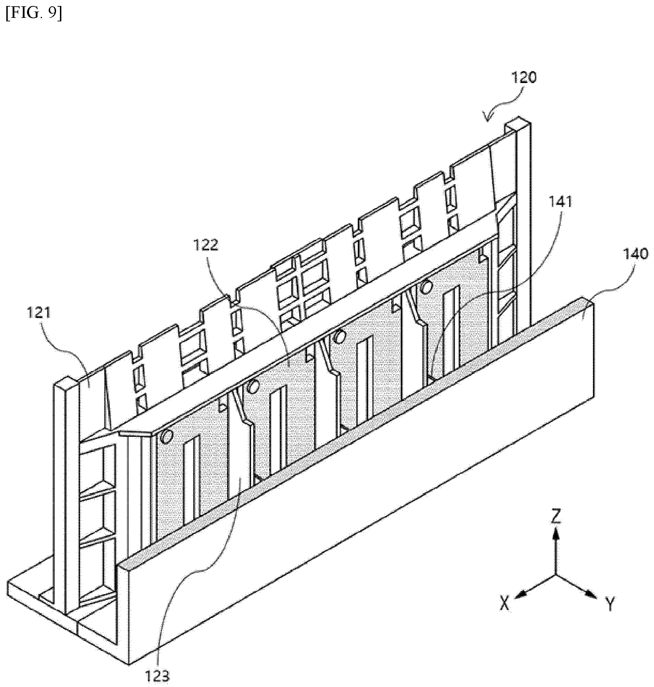

FIG. 9 illustrates a metal protrusion D grown on a busbar 122 provided on the busbar frame 121 of FIG. 7, wherein the separation wall member 141 is more proximate to the busbar 122.

Referring to FIG. 9, a metal protrusion D is formed on the busbar 122 located on the right side relative to the rib 123, along the side of the rib 123 and the separation wall member 141, but is blocked by the end of the separation wall member 141, preventing it from passing through the space between the narrowing rib 123 and the separation wall member 141.

Since the ribs 123 and separation wall members 141 are not completely adhered to each other, the space between each busbar 122 is not physically isolated. However, the direction in which the ribs 123 and separation wall members 141 extend is symmetrical to each other, which may impose a structural movement restriction on the metal protrusions D growing on the surface of the busbar 122. That is, the space between the ribs 123 and separation wall members 141 is zigzagged, so that the metal protrusions D cannot pass through smoothly.

### (Second embodiment)

FIG. 10 illustrates a busbar frame assembly 120 included in a cell stack assembly 100 according to a second embodiment and an insulating cover 140 coupled thereto, wherein the insulating cover 140 has been partially incised for ease of understanding.

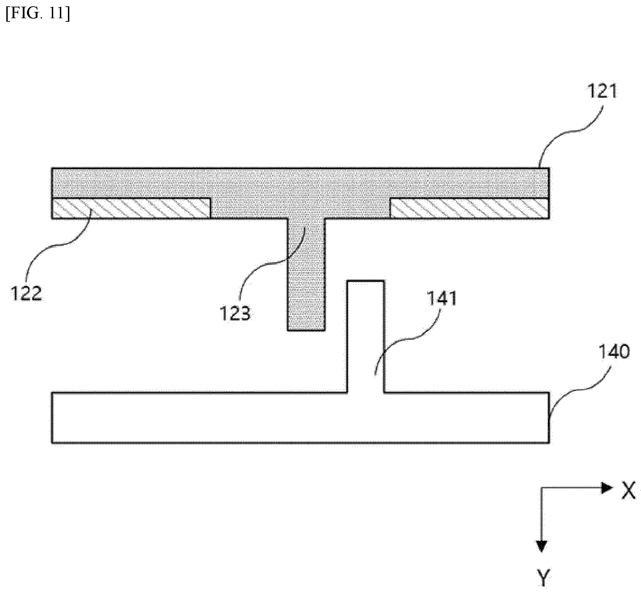

FIG. 11 is a sectional view of the busbar frame assembly 120 and insulating cover 140 of FIG. 10, showing only a portion of the area where ribs 123 and separation wall members 141 are located.

Referring to FIGS. 10 and 11 above, the separation wall member 141 is formed to protrude beyond a spacing distance from the end of the rib 123 to the inner side of the insulating cover 140. However, the separation wall member 141 is spaced apart from the rib 123 by a predetermined distance along the longitudinal direction of the busbar frame 121, i.e., in the X direction, so as not to contact the rib 123.

Since the ribs 123 and separation wall members 141 are not completely adhered to each other, the space between each busbar 122 is not physically isolated. However, the direction in which the ribs 123 and separation wall members 141 extend is symmetrical to each other, which may impose a structural movement restriction on the metal protrusions D growing on the surface of the busbar 122. That is, the space between the ribs 123 and separation wall members 141 is zigzagged, so that the metal protrusions D cannot pass through smoothly.

The separation wall member 141 included in the cell stack assembly 100 according to the second embodiment has a longer protruding length than that of the first embodiment. Accordingly, the effect of blocking the metal protrusions D may be higher due to a larger degree of bending of the space between the separation wall member 141 and the rib 123.

### (Third embodiment)

FIG. 12 illustrates a busbar frame assembly 120 included in a cell stack assembly 100 according to a third embodiment and an insulating cover 140 coupled thereto, wherein the insulating cover 140 has been partially incised for ease of understanding.

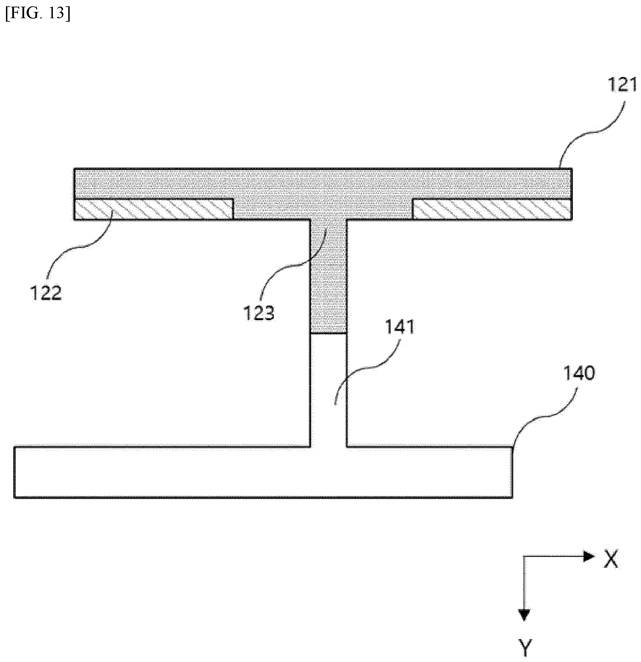

FIG. 13 is a sectional view of the busbar frame assembly 120 and insulating cover 140 of FIG. 12, showing only a portion of the area where ribs 123 and separation wall members 141 are located.

Referring to FIGS. 12 and 13, the separation wall member 141 is formed to protrude by a spacing distance from the end of the rib 123 to the inner side of the insulating cover 140.

The separation wall members 141 are formed at a same position as the ribs 123, and the separation wall members 141 and ribs 123 are coupled against each other so as to isolate the space between each busbar 122.

Since the ribs 123 and separation wall member 141 are in full contact, each busbar 122 space is physically isolated as shown in FIG. 13.

Thus, the cell stack assembly 100 including the separation wall member 141 in the form described above essentially prevents two or more busbars 122 from being connected to each other due to the metal protrusions D.

### (Fourth embodiment)

FIG. 14 illustrates a busbar frame assembly 120 included in a cell stack assembly 100 according to a fourth embodiment and an insulating cover 140 coupled thereto, wherein the insulating cover 140 has been partially incised for ease of understanding.

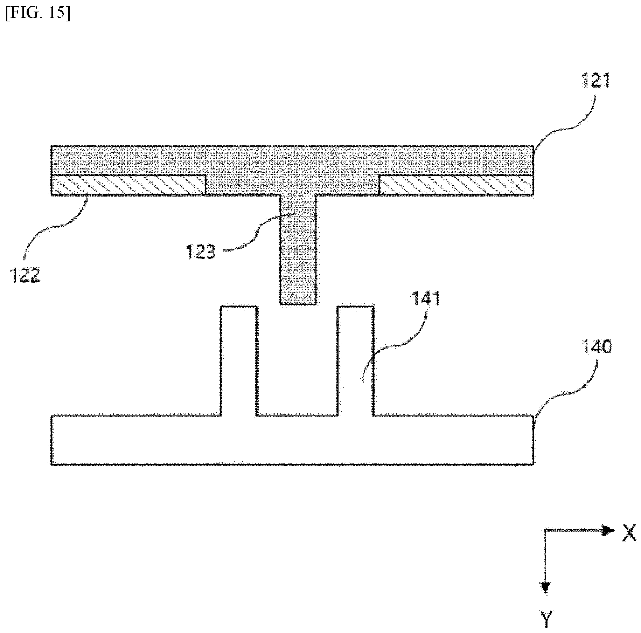

FIG. 15 is a sectional view of the busbar frame assembly 120 and insulating cover 140 of FIG. 14, showing only a portion of the area where ribs 123 and separation wall members 141 are located.

Each rib 123 included in the cell stack assembly 100 according to a fourth embodiment is correspondingly formed with a pair of separation wall members 141.

Referring to FIGS. 14 and 15, the pair of separation wall members 141 protrude by a spacing distance from the ends of the ribs 123 to the inner side of the insulating cover 140.

However, the separation wall members 141 are spaced apart from the ribs 123 by a predetermined distance along the longitudinal direction of the busbar frame 121, i.e., in the X-direction, so as not to contact the ribs 123.

That is, in the pair of separation wall members 141 corresponding to one of the ribs 123, one separation wall member 141 is spaced apart to the left of the rib 123, and the other separation wall member 141 is spaced apart to the right of the rib 123. Preferably, the pair of separation wall members 141 are spaced apart by a predetermined distance wider than the thickness of the rib 123.

Since the ribs 123 and separation wall members 141 are not completely adhered to each other, the space between each busbar 122 is not physically isolated. However, the direction in which the ribs 123 and separation wall members 141 extend is symmetrical to each other, which may impose a structural movement restriction on the metal protrusions D growing on the surface of the busbar 122. That is, the space between the ribs 123 and separation wall members 141 is zigzagged, so that the metal protrusions D cannot pass through smoothly.

In particular, in the cell stack assembly 100 according to the fourth embodiment, the metal protrusions D formed on the surface of one of the busbars 122 should be redirected one more time than in the cell stack assembly 100 of the first or second embodiment to pass between the rib 123 and the pair of separation wall members 141. In other words, in the cell stack assembly 100 according to the fourth embodiment, it is more difficult for the metal protrusions D to reach beyond the rib 123 to the other adjacent busbar 122.

### (Fifth embodiment)

FIG. 16 illustrates a busbar frame assembly 120 included in a cell stack assembly 100 according to a fifth embodiment and an insulating cover 140 coupled thereto, wherein the insulating cover 140 has been partially incised for ease of understanding.

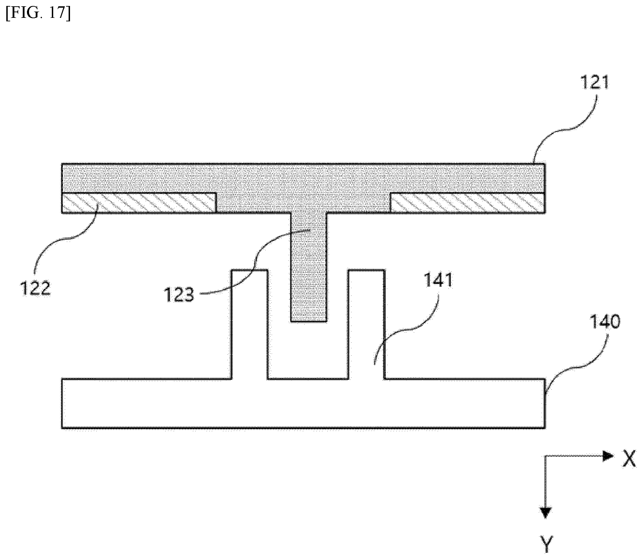

FIG. 17 is a sectional view of the busbar frame assembly 120 and insulating cover 140 of FIG. 16, showing only a portion of the area where ribs 123 and separation wall members 141 are located.

Each rib 123 included in the cell stack assembly 100 according to a fifth embodiment is correspondingly formed with a pair of separation wall members 141.

Referring to FIGS. 16 and 17, the pair of separation wall members 141 protrude beyond a spacing distance from the ends of the ribs 123 to the inner side of the insulating cover 140.

However, the separation wall members 141 are spaced apart from the ribs 123 by a predetermined distance along the longitudinal direction of the busbar frame 121, i.e., in the X-direction, so as not to contact the ribs 123.

That is, in the pair of separation wall members 141 corresponding to one of the ribs 123, one separation wall member 141 is spaced apart to the left of the rib 123, and the other separation wall member 141 is spaced apart to the right of the rib 123. Preferably, the pair of separation wall members 141 are spaced apart by a predetermined distance wider than the thickness of the rib 123.

Since the ribs 123 and separation wall members 141 are not completely adhered to each other, the space between each busbar 122 is not physically isolated. However, the direction in which the ribs 123 and separation wall members 141 extend is symmetrical to each other, which may impose a structural movement restriction on the metal protrusions D growing on the surface of the busbar 122. That is, the space between the ribs 123 and separation wall members 141 is zigzagged, so that the metal protrusions D cannot pass through smoothly.

In particular, in the cell stack assembly 100 according to the fifth embodiment, the metal protrusions D formed on the surface of one of the busbars 122 must be redirected one more time than in the cell stack assembly 100 of the first or second embodiment to pass between the rib 123 and the pair of separation wall members 141. In other words, in the cell stack assembly 100 according to the fifth embodiment, it is more difficult for the metal protrusions D to reach beyond the rib 123 to the other adjacent busbar 122.

The separation wall member 141 included in the cell stack assembly 100 according to the fifth embodiment has a longer protruding length than that of the fourth embodiment. Accordingly, the effect of blocking the metal protrusions D may be higher due to a larger degree of bending of the space between the separation wall member 141 and the rib 123.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may be substituted for them at the time of filing the present disclosure.

### [Reference numerals]

10: (PRIOR ART) CELL STACK ASSEMBLY
20: (PRIOR ART) CELL STACK
21: (PRIOR ART) CELL
30: (PRIOR ART) ELECTRODE LEAD
40: (PRIOR ART) BUSBAR FRAME
50: (PRIOR ART) BUSBAR
60: (PRIOR ART) MODULE FRAME
70: (PRIOR ART) END PLATE
100: CELL STACK ASSEMBLY
110: CELL STACK
111: CELL
111a: ELECTRODE LEAD
120: BUSBAR FRAME ASSEMBLY
121: BUSBAR FRAME
122: BUSBAR
123: RIB
130: END PLATE
140: INSULATING COVER
141: SEPARATION WALL MEMBER
150: MODULE FRAME
D: METAL PROTRUSION

## Claims

1. A cell stack assembly comprising:
a cell stack comprising a plurality of cells from which electrode leads are drawn out;
a busbar frame assembly comprising a plurality of busbars electrically connected to the electrode leads of the cell stack, a busbar frame supporting the busbar, and ribs spanning between the busbars, and coupled to the cell stack; and
an insulating cover coupled to the busbar frame to cover the busbar frame assembly, wherein
the insulating cover comprises a separation wall member formed at a location corresponding to a rib of the busbar frame assembly.

2. The cell stack assembly of claim 1, wherein
the rib is arranged to be spaced apart along a longitudinal direction of the busbar frame, and extend along a width direction of the busbar frame.

3. The cell stack assembly of claim 1, wherein
the separation wall member is formed to extend along a longitudinal direction of the rib to limit the space between any pair of neighboring busbars.

4. The cell stack assembly of claim 1, wherein
the separation wall member is formed in one-to-one correspondence with each rib.

5. The cell stack assembly of claim 4, wherein
the separation wall member protrudes by a spacing distance from an end of the rib to an inner side of the insulating cover.

6. The cell stack assembly of claim 5, wherein
the separation wall members are spaced apart from the rib at a predetermined distance along a longitudinal direction of the busbar frame so as not to abut the ribs.

7. The cell stack assembly of claim 5, wherein
the separation wall member is formed at a same position as the rib, and
the separation wall member and the rib are butted together to isolate the space between each busbar.

8. The cell stack assembly of claim 4, wherein
the separation wall member protrudes beyond a spacing distance from an end of the rib to an inner side of the insulating cover.

9. The cell stack assembly of claim 8, wherein
the separation wall members are spaced apart from the ribs at a predetermined distance along a longitudinal direction of the busbar frame so as not to abut the ribs.

10. The cell stack assembly of claim 1, wherein
each of the ribs is formed with a pair of corresponding separation wall members.

11. The cell stack assembly of claim 10, wherein
the pair of separation wall members are spaced apart by a predetermined distance greater than the thickness of the ribs.

12. The cell stack assembly of claim 10, wherein
the pair of separation wall members protrude by a spacing distance from an end of the ribs to an inner side of the insulating cover.

13. The cell stack assembly of claim 12, wherein
the pair of separation wall members are spaced apart from the ribs at a predetermined distance along a longitudinal direction of the busbar frame so as not to abut the ribs.

14. The cell stack assembly of claim 10, wherein
the pair of separation wall members protrude beyond a spacing distance from an end of the ribs to an inner side of the insulating cover.

15. The cell stack assembly of claim 14, wherein
the pair of separation wall members are spaced apart from the ribs at a predetermined distance along a longitudinal direction of the busbar frame so as not to abut the ribs.
